# EUROPÄISCHE PATENTSCHRIFT

(11) **EP 1 306 578 B1**
(45) Veröffentlichungstag und Bekanntmachung des Hinweises auf die Patenterteilung: **07.12.2005**
(21) Anmeldenummer: 02019628.3
(22) Anmeldetag: 03.09.2002
(51) Int. Cl.: F16F 15/027, F16F 15/02, F16F 15/134

(54) **Verfahren zur Steuerung eines Aggregatelagers**
Method for controlling a unit support
Méthode de commande d'un support d'unité

(30) Priorität: 12.10.2001 DE 10150607
(43) Veröffentlichungstag der Anmeldung: 02.05.2003
(73) Patentinhaber: Bayerische Motoren Werke Aktiengesellschaft, 80809 München (DE)
(72) Erfinder: Lischka, Christof, 85774 Unterföhring (DE); Roetsch, Karl, 85229 Markt Indersdorf (DE)

(56) Entgegenhaltungen:
- EP-A- 1 306 577
- DE-A- 19 729 980
- SE-A- 8 901 690
- US-A- 3 483 951

## Beschreibung

Die Erfindung bezieht sich auf ein Verfahren zur Steuerung eines Aggregatelagers nach dem Oberbegriff des Anspruchs 1.

Aus der DE 197 29 980 A1 ist ein solches Verfahren bekannt, bei dem die Federrate der Aggregatelager zum Dämpfen von bestimmten Schwingungszuständen des Aggregats veränderbar ist.

Dazu wird das niederfrequente Schwingungsverhalten des Systems durch eine kurzzeitige Verstimmung infolge Änderung der Federsteifigkeit so beeinflusst, dass ein Einschwingen infolge von Fahrbahnanregungen verhindert wird, ohne das akustische Übertragungsverhalten spürbar zu verschlechtern. Damit wirkt sich dieses Verstellsystem sowohl positiv auf den Leerlauf, als auch den Fahrbetrieb aus.

Allerdings können, bei einer erforderlichen Federratenänderung in einem Bereich vom Fünffachen der Grundsteifigkeit innerhalb eines Zeitraumes von weniger als 10 ms, bei ungünstigem Verlauf der Steifigkeitskurve über der Zeit, sehr hohe Kraftspitzen entstehen, die als störende, klopfende Geräusche im Fahrzeuginneren hörbar werden.

Deshalb ist es Aufgabe der Erfindung, ein Verfahren zur Ansteuerung eines Aggregatelagers bereitzustellen, bei dem durch eine gezielte Auslegung der Steifigkeitskurve über der Zeit die störenden Kraftspitzen soweit reduziert werden können, dass sie akustisch nicht mehr wahrnehmbar sind.

Diese Aufgabe wird erfindungsgemäß mit den Merkmalen des Anspruchs 1 gelöst. Weitere Ausgestaltungen der Erfindung ergeben sich aus den Unteransprüchen.

Die Erfindung stellt ein Verfahren bereit, zur Steuerung eines Aggregatelagers, dessen Federrate vorrangig auf die Isolation der von einem Aggregat erzeugten Schwingungen abgestimmt ist. Mit einer Einrichtung zur Veränderung der Federrate wird ein Einschwingen einer niederfrequenten Eigenschwingung des Aggregats verhindert. Das Verfahren ist dadurch gekennzeichnet, daß die Federrate während einer bestimmten Zeitdauer, die genau einem Viertel der Schwingungsdauer der Eigenschwingung des Aggregates entspricht, so verändert wird, dass die Lagersteifigkeit, innerhalb von höchstens zehn Millisekunden, von einer Grundsteifigkeit mit einer bestimmten Federrate stetig bis zu einer Maximalsteifigkeit mit einer maximalen Federrate ansteigt und anschließend stetig so abfällt, dass die Grundsteifigkeit mit der bestimmten Federrate genau nach der bestimmten Zeitdauer erreicht wird, wobei mindestens eine Messgröße, mittels derer die Bewegung des Aggregats erfasst werden kann, insbesondere die Beschleunigung des Aggregats, durch mindestens einen Aufnehmer ständig erfasst wird.

Dieses Verfahren bildet einen geschlossenen Regelkreis zur ständigen Ermittlung der aktuell idealen Steifigkeit des Aggregatelagers während des niederfrequenten Schwingvorganges, in Abhängigkeit von der Schwinggeschwindigkeit. Das Auftreten der sogenannten Stuckerschwingungen wird aus dem Verfolgen der Bewegung des Aggregats, zum Beispiel mittels eines Beschleunigungsaufnehmers, anhand der Überschreitung eines vorgegebenen Grenzwertes A_{G1} von Schwingweg, Schwinggeschwindigkeit oder Schwingbeschleunigung erkannt. Diese niederfrequenten Eigenschwingungen des Aggregates aktivieren die aktive Schwingungsdämpfung durch die Veränderung der Federrate der Aggregatelager. Ein sehr günstiger Zeitpunkt, an dem die Veränderung der Federrate zur Dämpfung von Stuckerschwingungen beginnen kann, ist ein Nulldurchgang der niederfrequenten Eigenschwingung, insbesondere wenn die Veränderung der Federrate bezogen auf den niederfrequenten Eigenschwingungsverlauf periodisch oder stochastisch wiederholt wird. Deaktiviert wird die aktive Veränderung der Federrate der Aggregatelager, wenn alle niederfrequenten Eigenschwingungen des Aggregates einen weiteren vorgegebenen Grenzwert unterschreiten.

Aus der ständigen Erfassung der Aggregatebewegung in der relevanten Richtung, vorzugsweise durch Messung der Beschleunigung, wird die aktuelle Schwinggeschwindigkeit v_{Aggregat} berechnet, zum Beispiel durch Bildung des Integrals aus der Beschleunigungsmessung über der Zeit. Dann folgt die Ermittlung der maximalen Schwinggeschwindigkeit v_{Aggregat max} und die ständige Berechnung der Kenngröße kᵥ(t) = v_{Aggregat}(t) / v_{Aggregat max}. Für die weiteren Schritte des Regelungsprozesses sind zwei Alternativen möglich, die Ermittlung der maximalen Schwinggeschwindigkeit für jede halbe Schwingungsperiode oder das einmalige Erfassen der maximalen Schwinggeschwindigkeit.

Erstere ist dadurch gekennzeichnet, dass der Wert der aktuellen idealen Federrate c(t) des Aggregatelagers gleich dem Wert der Federrate c₀ der Grundsteifigkeit gesetzt wird, wenn der Quotient kᵥ(t) aus der aktuellen Schwinggeschwindigkeit v_{Aggregat}(t) und der maximalen Schwinggeschwindigkeit v_{Aggregat max} des Aggregats zum Zeitpunkt eines Nulldurchgangs vₘₐₓᵣ der Aggregateschwingung negativ ist. Wenn der Quotient kᵥ(t) zum Zeitpunkt eines Nulldurchgangs vₘₐₓᵣ der Aggregateschwingung positiv ist, wird der Wert der aktuellen idealen Federrate c(t) des Aggregatelagers größer dem Wert der Federrate c₀ der Grundsteifigkeit gesetzt. Der Wert der aktuellen idealen Federrate c(t) des Aggregatelagers ergibt sich dann aus einer Addition der Federrate c₀ der Grundsteifigkeit und der Federrate cₘₐₓ der Maximalsteifigkeit abzüglich der Federrate c₀ der Grundsteifigkeit multipliziert mit dem Wert des Quotienten kᵥ(t) aus der aktuellen Schwinggeschwindigkeit v_{Aggregat}(t) und der maximalen Schwinggeschwindigkeit v_{Aggregat max} des Aggregats zum Zeitpunkt eines Nulldurchgangs vₘₐₓᵣ der Aggregateschwingung, wenn der Wert des Quotienten aus der aktuellen Schwinggeschwindigkeit v_{Aggregat}(t) und der maximalen Schwinggeschwindigkeit v_{Aggregat max} des Aggregats zum Zeitpunkt eines Nulldurchgangs vₘₐₓᵣ positiv oder Null ist.

Bei der zweiten Alternative, dem einmaligen Erfassen der maximalen Schwinggeschwindigkeit wird der Wert der aktuellen idealen Federrate c(t) des Aggregatelagers gleich dem Wert der Federrate c₀ der Grundsteifigkeit gesetzt, wenn der Betrag des Quotienten kᵥ(t) über der Zeit steigend ist. Wenn der Betrag des Quotienten kᵥ(t) über der Zeit fallend oder konstant ist und zwischen Null und Eins liegt, ergibt sich der Wert der aktuellen idealen Federrate c(t) des Aggregatelagers aus einer Addition der Federrate c₀ der Grundsteifigkeit und der Federrate cₘₐₓ der Maximalsteifigkeit, abzüglich der Federrate c₀ der Grundsteifigkeit multipliziert mit dem Betrag des Quotienten aus der aktuellen Schwinggeschwindigkeit v_{Aggregat}(t) und der maximalen Schwinggeschwindigkeit v_{Aggregat max} des Aggregats.

Ein großer Vorteil des Verfahrens liegt darin, dass das Aggregatelager, wenn die Relativgeschwindigkeit zwischen einer Karosserie und dem Aggregat dämpfend wirkt, so angesteuert werden kann, dass mit der Abnahme der niederfrequenten Eigenschwingung des Aggregats die Maximalsteifigkeit mit der maximalen Federrate des Aggregatelagers abnimmt und wenn die Relativgeschwindigkeit zwischen der Karosserie und dem Aggregat anfachend wirkt, am Aggregatelager die Grundsteifigkeit mit der bestimmten Federrate eingestellt werden kann.

Anspruch 13 beschreibt einen bevorzugten Anwendungsfall der Erfindung. Das Aggregatelager ist hier als Motorlager in einem Kraftfahrzeug ausgebildet und zur Isolation der freien Gas- und Massenkräfte des Motors, in der Regel einer Brennkraftmaschine, entsprechend weich ausgelegt. Neben diesen motorbedingten Vibrationen führt der Motor auch niederfrequente Bewegungen (Stuckerschwingungen) mit der Eigenfrequenz der Motorlagerung (ca. 5 bis 15 Hz) aus, die beispielsweise auf Fahrbahnanregungen zurückgehen. Durch das erfindungsgemäße Verfahren zur Verhinderung des Einschwingens einer niederfrequenten Eigenschwingung (Stuckerschwingung) des Antriebsaggregates eines Kraftfahrzeuges kann wirkungsvoll der Ausbildung von Stuckerschwingungen entgegengewirkt werden.

Anwendbar ist dieses Prinzip vorzugsweise für Aggregatelagerungen von Kraftfahrzeugen, aber auch für andere Lagerungsfälle mit hohen Anforderungen hinsichtlich Schwingungskomfort, Laufruhe bzw. Akustik. Beispiele hierfür sind Lagerungssysteme für Schiffe, Schienenfahrzeuge, Luftfahrzeuge oder stationäre Maschinen bzw. Antriebe, zum Beispiel Kompressoren, Waschmaschinen, Werkzeugmaschinen, Fördermaschinen etc.. Es dient der Verbesserung des Akustik- und Schwingungskomforts in allen Betriebszuständen der Aggregate.

Das erfindungsgemäße Verfahren ist nachfolgend in der Zeichnung anhand möglicher Abläufe dargestellt und näher erläutert. Es zeigen:
- Figur 1: in schematischer Darstellung die Anordnung eines Antriebsaggregates in einem Kraftfahrzeug,
- Figur 2: eine schematische Darstellung eines Aggregates, das mittels einer Feder mit veränderbarer Federrate gelagert ist,
- Figur 3: den Schwingungsverlauf der Eigenschwingung des Aggregates von Figur 2 und
- Figur 4: den Schwingungsverlauf der Eigenschwingung des Aggregates von Figur 2 in anderer Darstellung mit dem zeitlich daran gekoppelten Verlauf der Federrate des Lagers von Figur 2 bei einer Ansteuerung nach dem erfindungsgemäßen Verfahren.

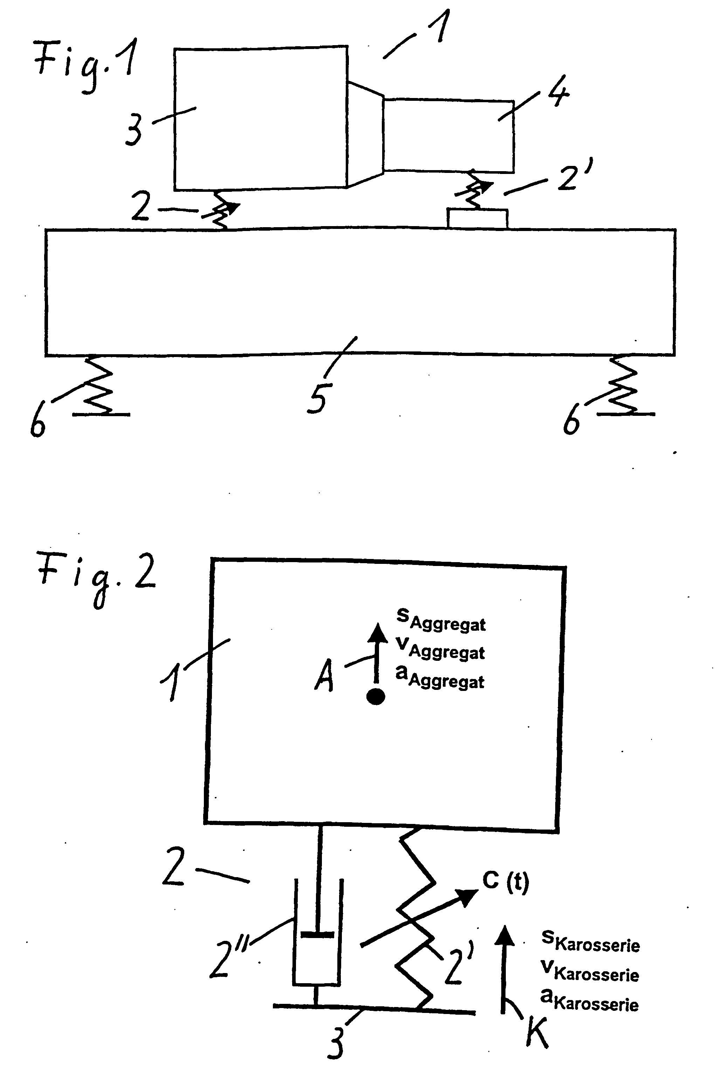

Figur 1 zeigt die Lagerung eines Antriebsaggregates 1, das sich aus einem Motor 3 und einem Getriebe 4 zusammensetzt. Das Antriebsaggregat 1 ist über Aggregatelager 2 und 2' gegenüber einer Karosserie 5 gelagert. Die Karosserie 5 ist ihrerseits über Federn 6 und nicht gezeichneten Dämpfern an nicht gezeichneten Rädern abgestützt. Die Aggregatelager 2, 2' weisen eine veränderliche Federrate auf.

Figur 2 zeigt ein Aggregat 1, das über ein Lager 2, bestehend aus einem Dämpfer 2" und einer Feder 2' mit einer über die Zeit t veränderlichen Federrate c an eine Umgebung 3 angebunden ist. Das Aggregat 1 kann aufgrund der Nachgiebigkeit des Lagers 2 in Richtung des Pfeils A Bewegungen ausführen, die sich durch einen Weg s oder eine Geschwindigkeit v oder eine Beschleunigung a darstellen lassen.

Das Aggregat 1, beispielsweise die Brennkraftmaschine eines Kraftfahrzeuges, schwingt periodisch, ebenso wie die Umgebung 3, beispielsweise die Karosserie eines Kraftfahrzeuges, die in Richtung des Pfeils K Bewegungen ausführt, die sich auch durch einen Weg s oder eine Geschwindigkeit v oder eine Beschleunigung a darstellen lassen.

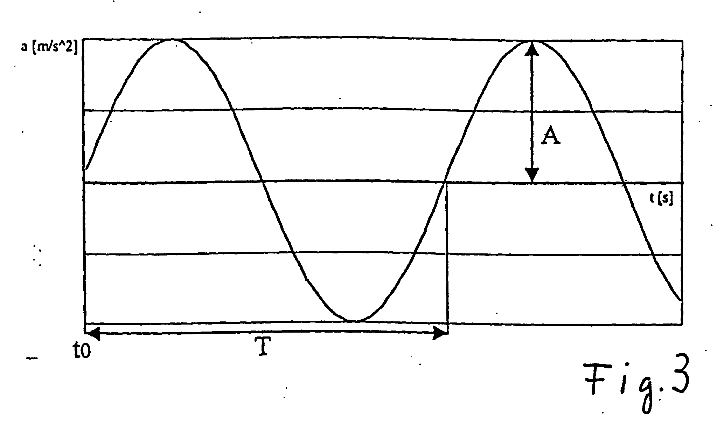

In Figur 3 ist der Verlauf einer Beschleunigung a des Aggregats 1 über die Zeit t dargestellt. Das Aggregat 1 macht eine Schwingbewegung mit der Amplitude A und der Schwingzeit T. Hierbei handelt es sich um eine Schwingung mit der Eigenfrequenz f=1/T des Systems aus Aggregat 1 und elastischer Lagerung 2. Die Beschleunigung a(t) des Aggregats 1 wird ständig durch Messung erfasst.

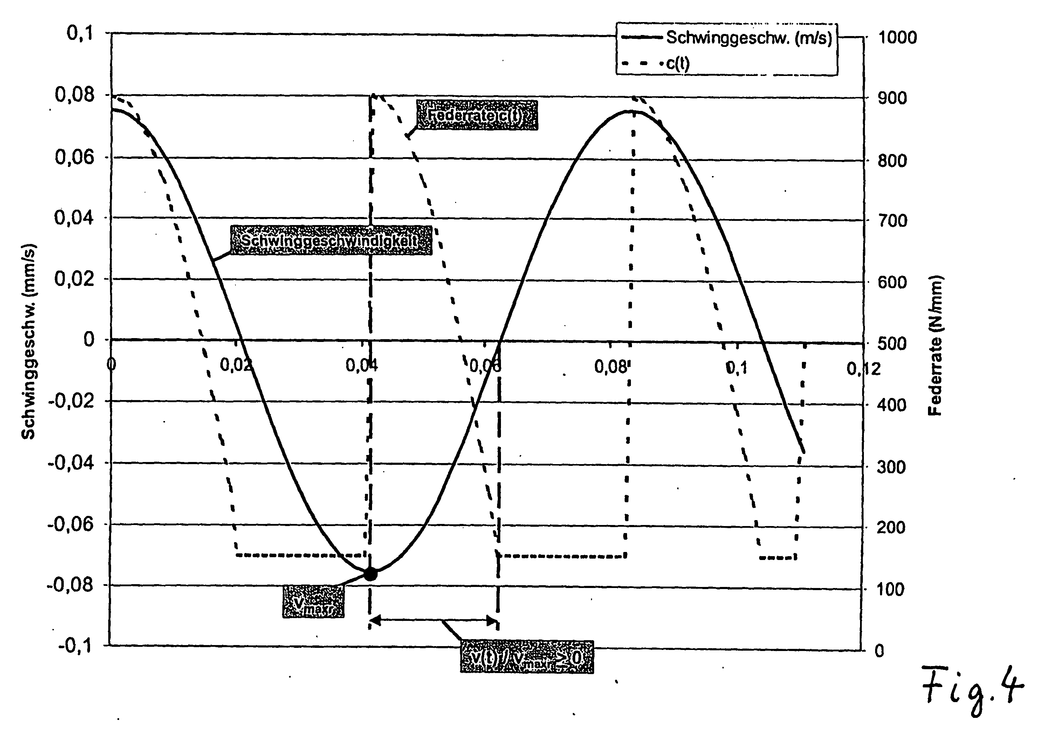

Figur 4 zeigt einen Verlauf einer geregelten Lagersteifigkeit über der Zeit c(t) und den dazu gehörigen Verlauf der Schwinggeschwindigkeit v(t) eines Aggregats. Es wird ein geschlossener Regelkreis zur ständigen Ermittlung der aktuell idealen Steifigkeit c des Aggregatelagers während des Schwingvorganges, in Abhängigkeit von der Schwinggeschwindigkeit v verwendet. Aus der ständigen Erfassung der Aggregatebewegung in der relevanten Richtung, vorzugsweise durch Messung der Beschleunigung, wird die aktuelle Schwinggeschwindigkeit v_{Aggregat} berechnet, zum Beispiel durch Bildung des Integrals aus der Beschleunigungsmessung über der Zeit. Dann folgt die Ermittlung der maximalen Schwinggeschwindigkeit v_{Aggregat max} und die ständige Berechnung der Kenngröße kᵥ(t) = v_{Aggregat}(t) / v_{Aggregat max}. Für die weiteren Schritte des Regelungsprozesses sind zwei Alternativen möglich, die Ermittlung der maximalen Schwinggeschwindigkeit für jede halbe Schwingungsperiode oder das einmalige Erfassen der maximalen Schwinggeschwindigkeit.

Bei der ersten Alternative wird der Wert von v_{Aggregat max} = v_{Aggregat maxr} bei jedem Nulldurchgang des Schwingweges, d.h. bei jedem Erreichen eines relativen Geschwindigkeitsmaximums v_{Aggregat maxr} ermittelt. Für die Regel-Kenngröße Kᵥ(t) gilt dann: wenn v_{Aggregat}(t)/ v_{Aggregat maxr}≥0, dann ist Kᵥ(t) = v_{Aggregat}(t) / v_{Aggregat maxr} beziehungsweise wenn v_{Aggregat}(t)/ v_{Aggregat maxr} < 0, dann ist Kᵥ(t) = 0 Dann folgt die Berechnung des aktuell einzustellenden Steifigkeitswertes nach folgender Formel: c(t) = c₀ + c_{S} · kᵥ(t) mit cₛ = cₘₐₓ - c₀ und die Wiederholung dieses Vorganges bei jedem Nulldurchgang des Schwingweges. Dabei ist
c₀ = Basis- bzw. minimale Federrate,
Cₘₐₓ = maximale Federrate
cₛ = Spreizung der Federrate = cₘₐₓ - c₀

Für die zweite Alternative, das einmalige Erfassen von v_{Aggregat max,} wird bei Überschreitung des Grenzwertes A_{G1} das aktuelle relative Geschwindigkeitsmaximum gespeichert.

Solange der Betrag der maximalen Schwinggeschwindigkeit |v_{Aggregat max}| nicht den Wert 0 annimmt, bzw. über einem vorgegebenen Grenzwert v_{G2} liegt, wird die ideale aktuelle Federrate c(t) nach folgendem Algorithmus errechnet:
solange |kᵥ(t)| über der Zeit fallend oder konstant ist, d.h. d|kᵥ(t)|/dt ≤ 0, ist c(t) = c₀ + cₛ · |kᵥ(t)| mit der Bedingung 0 ≤ |kᵥ(t)| ≤ 1,
wenn |kᵥ(t)| über der Zeit anwächst, d.h. d|kᵥ(t)|/dt > 0, dann ist c(t) = c₀

Merkmal dieses Verfahrens ist, dass die von der Lagerung über der Zeit eingenommene maximale Federsteifigkeit mit abnehmender Schwingung kleiner wird, was Vorteile beim Komfort bringt.

## Patentansprüche

1. Verfahren zur Steuerung eines Aggregatelagers (2,2'), dessen Federrate (c) vorrangig auf die Isolation der von einem Aggregat (1) erzeugten Schwingungen abgestimmt ist, mit einer Einrichtung zur Veränderung der Federrate (c) zur Verhinderung des Einschwingens einer niederfrequenten Eigenschwingung des Aggregats (1), **dadurch gekennzeichnet, dass** die Federrate (c) während einer bestimmten Zeitdauer, die genau einem Viertel (T/4) der Schwingungsdauer (T₀) der Eigenschwingung des Aggregates (1) entspricht, so verändert wird, dass die Lagersteifigkeit, innerhalb von höchstens zehn Millisekunden, von einer Grundsteifigkeit mit einer bestimmten Federrate (c₀) stetig bis zu einer Maximalsteifigkeit mit einer maximalen Federrate (cₘₐₓ) ansteigt und anschließend stetig so abfällt, dass die Grundsteifigkeit mit der bestimmten Federrate (c₀) genau nach der bestimmten Zeitdauer (T/4) erreicht wird, wobei mindestens eine Messgröße, mittels derer die Bewegung des Aggregats (1) erfasst werden kann, insbesondere die Beschleunigung (a_{Aggregat}) des Aggregats (1), durch mindestens einen Aufnehmer ständig erfasst wird.

2. Verfahren nach Anspruch 1, **dadurch gekennzeichnet, dass** der Zeitpunkt, an dem die Veränderung der Federrate (c) beginnt, einem Nulldurchgang der niederfrequenten Eigenschwingung entspricht.

3. Verfahren nach Anspruch 1 oder 2, **dadurch gekennzeichnet, dass** die Veränderung der Federrate (c) bezogen auf den niederfrequenten Eigenschwingungsverlauf periodisch oder stochastisch wiederholt wird.

4. Verfahren nach einem der vorhergehenden Ansprüche, **dadurch gekennzeichnet, dass** dieses beim Auftreten von niederfrequenten Eigenschwingungen des Aggregates (1), von denen mindestens eine einen vorgegebenen Grenzwert überschreitet, aktiviert wird und deaktiviert wird, wenn alle niederfrequenten Eigenschwingungen des Aggregates (1) einen weiteren vorgegebenen Grenzwert unterschreiten.

5. Verfahren nach einem der vorhergehenden Ansprüche, **dadurch gekennzeichnet, dass** während des niederfrequenten Schwingvorganges des Aggregats (1), in einem geschlossenen Regelkreis ständig die aktuelle ideale Federrate (c) des Aggregatelagers (2,2') in Abhängigkeit von der Schwinggeschwindigkeit (v_{Aggregat}) ermittelt wird, indem ständig eine Kenngröße gebildet wird, die dem Quotienten (kᵥ(t)) aus der aktuellen Schwinggeschwindigkeit (v_{Aggregat}(t)) und der maximalen Schwinggeschwindigkeit (v_{Aggregat max}) des Aggregats (1) entspricht.

6. Verfahren nach Anspruch 5, **dadurch gekennzeichnet, dass** die maximale Schwinggeschwindigkeit (v_{Aggregat max}) des Aggregats (1) für jede halbe Schwingungsperiode beim Auftreten von niederfrequenten Eigenschwingungen des Aggregates (1), von denen mindestens eine einen vorgegebenen Grenzwert überschreitet, ermittelt wird.

7. Verfahren nach Anspruch 5, **dadurch gekennzeichnet, dass** die maximale Schwinggeschwindigkeit (v_{Aggregat max}) des Aggregats (1) nur einmal beim Auftreten von niederfrequenten Eigenschwingungen des Aggregates (1), von denen mindestens eine einen vorgegebenen Grenzwert überschreitet, ermittelt wird.

8. Verfahren nach Anspruch 6, **dadurch gekennzeichnet, dass** der Wert der aktuellen idealen Federrate (c(t)) des Aggregatelagers (2,2') gleich dem Wert der Federrate (C₀) der Grundsteifigkeit gesetzt wird, wenn der Quotient (kᵥ(t)) aus der aktuellen Schwinggeschwindigkeit (v_{Aggregat}(t)) und der maximalen Schwinggeschwindigkeit (v_{Aggregat max}) des Aggregats (1) zum Zeitpunkt eines Nulldurchgangs (vₘₐₓᵣ) der Aggregateschwingung negativ ist.

9. Verfahren nach Anspruch 6, **dadurch gekennzeichnet, dass** der Wert der aktuellen idealen Federrate (c(t)) des Aggregatelagers (2,2') größer dem Wert der Federrate (c₀) der Grundsteifigkeit gesetzt wird, wenn der Quotient (kᵥ(t)) aus der aktuellen Schwinggeschwindigkeit (v_{Aggregat}(t)) und der maximalen Schwinggeschwindigkeit (v_{Aggregat max}) des Aggregats (1) zum Zeitpunkt eines Nulldurchgangs (vₘₐₓᵣ) der Aggregateschwingung positiv ist.

10. Verfahren nach Anspruch 9, **dadurch gekennzeichnet, dass** sich der Wert der aktuellen idealen Federrate (c(t)) des Aggregatelagers (2,2') ergibt aus einer Addition der Federrate (c₀) der Grundsteifigkeit und der Federrate (cₘₐₓ) der Maximalsteifigkeit abzüglich der Federrate (c₀) der Grundsteifigkeit multipliziert mit dem Wert des Quotienten (kᵥ(t)) aus der aktuellen Schwinggeschwindigkeit (v_{Aggregat}(t)) und der maximalen Schwinggeschwindigkeit (v_{Aggregat max}) des Aggregats (1) zum Zeitpunkt eines Nulldurchgangs (vₘₐₓᵣ) der Aggregateschwingung, wenn der Wert des Quotienten aus der aktuellen Schwinggeschwindigkeit (v_{Aggregat}(t)) und der maximalen Schwinggeschwindigkeit (v_{Aggregat max}) des Aggregats (1) zum Zeitpunkt eines Nulldurchgangs (vₘₐₓᵣ) positiv oder Null ist.

11. Verfahren nach Anspruch 7, **dadurch gekennzeichnet, dass** der Wert der aktuellen idealen Federrate (c(t)) des Aggregatelagers (2,2') gleich dem Wert der Federrate (c₀) der Grundsteifigkeit gesetzt wird, wenn der Betrag des Quotienten (kᵥ(t)) aus der aktuellen Schwinggeschwindigkeit (v_{Aggregat}(t)) und der maximalen Schwinggeschwindigkeit (v_{Aggregat max}) des Aggregats (1) über der Zeit steigend ist.

12. Verfahren nach Anspruch 7, **dadurch gekennzeichnet, dass** sich der Wert der aktuellen idealen Federrate (c(t)) des Aggregatelagers (2,2') ergibt aus einer Addition der Federrate (c₀) der Grundsteifigkeit und der Federrate (cₘₐₓ) der Maximalsteifigkeit abzüglich der Federrate (c₀) der Grundsteifigkeit multipliziert mit dem Betrag des Quotienten aus der aktuellen Schwinggeschwindigkeit (v_{Aggregat}(t)) und der maximalen Schwinggeschwindigkeit (v_{Aggregat max}) des Aggregats (1), wenn der Betrag des Quotienten (kᵥ(t)) über der Zeit fallend oder konstant ist und zwischen Null und Eins liegt.

13. Verfahren nach einem der vorhergehenden Ansprüche zur Verhinderung des Einschwingens einer niederfrequenten Eigenschwingung (Stuckerschwingung) des Antriebsaggregates (1) eines Kraftfahrzeuges.

## Claims

1. A method for controlling a unit bearing (2, 2'), the spring rate (c) of which is primarily matched to the insulation of the vibrations generated by a unit (1), comprising a device to change the spring rate (c) to prevent the transient response of a low-frequency natural vibration of the unit (1), **characterised in that** the spring rate (c) is changed for a specific time period, which corresponds precisely to a quarter (T/4) of the vibration duration (T₀) of the natural vibration of the unit (1), in such a way that the bearing rigidity constantly increases, within at most ten milliseconds, from a base rigidity with a specific spring rate (c₀), up to a maximum rigidity with a maximum spring rate (cₘₐₓ) and then decreases constantly such that the base rigidity with the specific spring rate (c₀) is reached precisely after the specific time period (T/4), at least one measured variable, by means of which the movement of the unit (1) can be detected, more especially the acceleration (aᵤₙᵢₜ) of the unit (1), being constantly detected by at least one sensor.

2. A method according to claim 1, **characterised in that** the instant, at which the change in the spring rate (c) begins, corresponds to a zero crossing of the low-frequency natural vibration.

3. A method according to claim 1 or 2, **characterised in that** the change in the spring rate (c) based on the low-frequency natural vibration course is repeated periodically or stochastically.

4. A method according to any one of the preceding claims, **characterised in that** it is activated on the occurrence of low-frequency natural vibrations of the unit (1), of which at least one exceeds a predetermined limit value and is deactivated when all low-frequency natural vibrations of the unit (1) fall below a further predetermined limit value.

5. A method according to any one of the preceding claims, **characterised in that**, during the low-frequency vibration process of the unit (1), the current ideal spring rate (c) of the unit bearing (2, 2') is constantly determined in a closed control loop as a function of the vibration speed (vᵤₙᵢₜ) **in that** a parameter is constantly formed which corresponds to the quotient (*k*ᵥ(t)) of the current vibration speed (vᵤₙᵢₜ(t)) and the maximum vibration speed (v_{unit max}) of the unit (1).

6. A method according to claim 5, **characterised in that** the maximum vibration speed (v_{unit max}) of the unit (1) is determined for each half vibration period on the occurrence of low-frequency natural vibrations of the unit (1), of which at least one exceeds a predetermined limit value.

7. A method according to claim 5, **characterised in that** the maximum vibration speed (v_{unit max}) of the unit (1) is only determined once on the occurrence of low-frequency natural vibrations of the unit (1), of which at least one exceeds a predetermined limit value.

8. A method according to claim 6, **characterised in that** the value of the current ideal spring rate (c(t)) of the unit bearing (2, 2') is set at equal to the value of the spring rate (c₀) of the base rigidity, when the quotient (*k*ᵥ(t)) of the current vibration speed (vᵤₙᵢₜ(t)) and the maximum vibration speed (v_{unit max}) of the unit (1) is negative at the instant of a zero crossing (vₘₐₓᵣ) of the unit vibration.

9. A method according to claim 6, **characterised in that** the value of the current ideal spring rate (c(t)) of the unit bearing (2, 2') is set at greater than the value of the spring rate (c₀) of the base rigidity, when the quotient (*k*ᵥ(t)) of the current vibration speed (vᵤₙᵢₜ(t)) and the maximum vibration speed (v_{unit max}) of the unit (1) is positive at the instant of a zero crossing (vₘₐₓᵣ) of the unit vibration.

10. A method according to claim 9, **characterised in that** the value of the current ideal spring rate (c(t)) of the unit bearing (2, 2') is produced by adding the spring rate (c₀) of the base rigidity and the spring rate (cₘₐₓ) of the maximum rigidity, less the spring rate (c₀) of the base rigidity multiplied by the value of the quotient (*k*ᵥ(t)) of the current vibration speed (vᵤₙᵢₜ(t)) and the maximum vibration speed (v_{unit max}) of the unit (1) at the instant of a zero crossing (vₘₐₓᵣ) of the unit vibration, when the value of the quotient of the current vibration speed (vᵤₙᵢₜ(t)) and the maximum vibration speed (v_{unit max}) of the unit (1) is positive or zero at the instant of a zero crossing (vₘₐₓᵣ).

11. A method according to claim 7, **characterised in that** the value of the current ideal spring rate (c(t)) of the unit bearing (2, 2') is set at equal to the value of the spring rate (c₀) of the base rigidity, when the amount of the quotient (*k*ᵥ(t)) of the current vibration speed (vᵤₙᵢₜ(t)) and the maximum vibration speed (v_{unit max}) of the unit (1) is increasing over the time.

12. A method according to claim 7, **characterised in that** the value of the current ideal spring rate (c(t)) of the unit bearing (2, 2') is produced by adding the spring rate (c₀) of the base rigidity and the spring rate (cₘₐₓ) of the maximum rigidity, less the spring rate (c₀) of the base rigidity multiplied by the amount of the quotient of the current vibration speed (vᵤₙᵢₜ(t)) and the maximum vibration speed (v_{unit max}) of the unit (1), when the amount of the quotient (*k*ᵥ(t)) over the time is falling or constant and is between zero and one.

13. A method according to any one of the preceding claims for preventing the transient response of a low-frequency natural vibration (Stucker vibration) of the drive unit (1) of a motor vehicle.

## Revendications

1. Procédé de commande d'un support d'unité (2, 2') dont le taux d'élasticité (c) est accordé en priorité sur l'isolation des oscillations générées par une unité (1), comprenant un dispositif pour faire varier le taux d'élasticité (c) pour empêcher un amorçage d'une oscillation propre à basse fréquence de l'unité (1),
**caractérisé en ce que**
le taux d'élasticité (c) varie pendant une durée déterminée qui correspond précisément à un quart (T/4) de la durée d'oscillation (To) de l'oscillation propre de l'unité (1) de telle sorte que la rigidité de support augmente continuellement en l'espace de dix millisecondes au maximum depuis une rigidité de base avec un taux d'élasticité (c₀) déterminé jusqu'à une rigidité maximale avec un taux d'élasticité maximum (cₘₐₓ), pour ensuite redescendre continuellement de telle sorte que la rigidité de base avec le taux d'élasticité (c₀) déterminé soit atteinte précisément au bout de la durée (T/4) déterminée, au moins une grandeur de mesure, au moyen de laquelle le mouvement de l'unité, notamment l'accélération (a_{Aggregat}), de l'unité (1) peut être mesurée, étant détectée en permanence par au moins un capteur.

2. Procédé selon la revendication 1,
**caractérisé en ce que**
le moment auquel commence la variation du taux d'élasticité (c) correspond à un passage par zéro de l'oscillation propre à basse fréquence.

3. Procédé selon la revendication 1 ou 2,
**caractérisé en ce que**
la variation du taux d'élasticité (c) par rapport à l'évolution de l'oscillation propre à basse fréquence est répétée périodiquement ou de manière stochastique.

4. Procédé selon l'une quelconque des revendications précédentes,
**caractérisé en ce que**
celui-ci est activé en présence d'oscillations propres à basse fréquence de l'unité (1) dont au moins une dépasse une valeur seuil prédéterminée, et désactivé lorsque toutes les oscillations propres à basse fréquence de l'unité (1) sont inférieures à une autre valeur seuil prédéterminée.

5. Procédé selon l'une quelconque des revendications précédentes,
**caractérisé en ce que**
pendant le processus d'oscillation à basse fréquence de l'unité (1) le taux d'élasticité (c) effectivement idéal du support d'unité (2, 2') est déterminé en permanence dans un circuit de régulation fermé, en fonction de la vitesse d'oscillation (v_{Aggregat}), en formant en permanence une grandeur caractéristique qui correspond au quotient (kᵥ(t) de la vitesse d'oscillation effective (v_{Aggregat}(t)) et de la vitesse d'oscillation maximale (v_{Aggregat max}) de l'unité (1).

6. Procédé selon la revendication 5,
**caractérisé en ce que**
la vitesse d'oscillation maximale (v_{Aggregat max}) de l'unité (1) est déterminée pour chaque demi-période d'oscillation en présence d'oscillations propres à basse fréquence de l'unité (1), dont au moins l'une dépasse une valeur seuil prédéterminée.

7. Procédé selon la revendication 5,
**caractérisé en ce que**
la vitesse d'oscillation maximale (v_{Aggregat max}) de l'unité (1) n'est déterminée qu'une seule fois en présence d'oscillations propres à basse fréquence de l'unité (1), dont au moins l'une dépasse une valeur seuil prédéterminée.

8. Procédé selon la revendication 6,
**caractérisé en ce que**
la valeur du taux d'élasticité (c(t)) effectivement idéal du support d'unité (2, 2') est fixée de manière égale à la valeur du taux d'élasticité (c₀) de la rigidité de base lorsque le quotient (kᵥ(t)) de la vitesse d'oscillation effective (v_{Aggregat}(t)) et de la vitesse d'oscillation maximale (v_{Aggregat max}) de l'unité (1) est négatif au moment d'un passage par zéro (vₘₐₓᵣ) de l'oscillation de l'unité (1).

9. Procédé selon la revendication 6,
**caractérisé en ce que**
la valeur du taux d'élasticité (c(t)) effectivement idéal du support d'unité (2, 2') est placée supérieur à la valeur du taux d'élasticité (c₀) de la rigidité de base lorsque le quotient (kᵥ(t)) de la vitesse d'oscillation effective (v_{Aggregat}(t)) et de la vitesse d'oscillation maximale (v_{Aggregat max}) de l'unité (1) est positif au moment d'un passage par zéro (vₘₐₓᵣ) de l'oscillation de l'unité (1).

10. Procédé selon la revendication 9,
**caractérisé en ce que**
la valeur du taux d'élasticité (c(t)) effectivement idéal du support d'unité (2, 2') résulte d'une addition du taux d'élasticité (c₀) de la rigidité de base et du taux d'élasticité (cₘₐₓ) de la rigidité maximale moins le taux d'élasticité (c₀) de la rigidité de base multiplié par la valeur du quotient (kᵥ(t)) de la vitesse d'oscillation effective (v_{Aggregat}(t)) et de la vitesse d'oscillation maximale (v_{Aggregat max}) de l'unité (1) au moment d'un passage par zéro (vₘₐₓᵣ) de l'oscillation de l'unité, lorsque la valeur du quotient de la vitesse d'oscillation effective (v_{Aggregat}(t)) et de la vitesse d'oscillation maximale (v_{Aggregat max}) de l'unité (1) au moment d'un passage par zéro (vₘₐₓᵣ) est positive ou égale à zéro.

11. Procédé selon la revendication 7,
**caractérisé en ce que**
la valeur du taux d'élasticité (c(t)) effectivement idéal du support d'unité (2, 2') est fixée de manière égale à la valeur du taux d'élasticité (c₀) de la rigidité de base lorsque le montant du quotient (kᵥ(t)) de la vitesse d'oscillation effective (v_{Aggregat}(t)) et de la vitesse d'oscillation maximale (v_{Aggregat max}) de l'unité (1) sur le temps est croissant.

12. Procédé selon la revendication 7,
**caractérisé en ce que**
la valeur du taux d'élasticité (c(t)) effectivement idéal du support d'unité (2, 2') résulte d'une addition du taux d'élasticité (c₀) de la rigidité de base et du taux d'élasticité (cₘₐₓ) de la rigidité maximale moins le taux d'élasticité (c₀) de la rigidité de base multiplié par le montant du quotient de la vitesse d'oscillation effective (v_{Aggregat}(t)) et de la vitesse d'oscillation maximale (v_{Aggregat max}) de l'unité (1) lorsque le montant du quotient (kᵥ(t)) sur le temps est décroissant ou constant et se situe entre zéro et un.

13. Procédé selon l'une quelconque des revendications précédentes, pour empêcher l'amorçage d'une oscillation propre à basse fréquence (oscillation par à-coups) de l'unité d'entraînement (1) d'un véhicule automobile.
